(19) Europäisches Patentamt

European Patent Office

Office européen des brevets

(11) **EP 1 583 368 A1**

(12) **EUROPEAN PATENT APPLICATION**

(43) Date of publication:
**05.10.2005 Bulletin 2005/40**

(51) Int Cl.⁷: **H04N 7/26**

(21) Application number: **04251920.7**

(22) Date of filing: **31.03.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL LT LV MK**

(71) Applicants:
• **Mitsubishi Electric Information Technology
Centre Europe B.V.
Surrey GU2 5YD (GB)**
Designated Contracting States:
**GB**

• **MITSUBISHI DENKI KABUSHIKI KAISHA
Tokyo 100-8310 (JP)**

(72) Inventor: **Secker, Andrew
Mitsuishi Denki Kabushiki Kaisha
Tokyo 100 (JP)**

(74) Representative: **Whitlock, Holly Elizabeth Ann
R G C Jenkins,
26 Caxton Street
London SW1H 0RJ (GB)**

(54) **Direction-adaptive scalable motion parameter coding for scalable video coding**

(57) A method of encoding motion picture data, , especially using motion compensated 3-D subband coding, wherein first components of the motion vectors from motion compensation are scalably encoded separately or independently of second components of the motion vectors, comprises separate bit-rate-allocation for the first and second components of motion vectors.

*Figure 1. Scalable video compression with scalable motion coding*

**Description**

The invention relates to a method and apparatus for encoding motion picture data in the form of a sequence of images. The invention is especially related to 3-D subband coding involving spatial and temporal filtering and motion compensation, and coding of motion vectors.

In heterogeneous communication networks such as the Internet, efficient video communication must provide for a wide variety of transmission constraints and video display parameters. Channel bandwidth may easily vary by several orders of magnitude between different users on the same network. Furthermore, the rapid progression towards network inter-connectivity has meant that devices such as mobile phones, handheld personal digital assistants and desktop workstations, each of which have different display resolutions and processing capabilities, may all have access to the same digital media content.

Scalable video coding aims to address the diversity of video communications networks and end-user interests, by compressing the original video content in such a way that efficient reconstruction at a multitude of different bit-rates and display resolutions are simultaneously supported. Bit-rate scalability refers to the ability to reconstruct a compressed video over a fine gradation of bit-rates, without loss of compression efficiency. This allows a single compressed bitstream to be accessed by multiple users, each user utilizing all of his/her available bandwidth. Without rate-scalability, several versions of the same video data would have to be made available on the network, significantly increasing the storage and transmission burden. Other important forms of scalability include spatial resolution and frame-rate (temporal resolution) scalability. These allow the compressed video to be efficiently reconstructed at various display resolutions, thereby catering for the different capabilities of all sorts of end-user devices. An overview of current motivations, past experiences, and emerging trends in scalable video compression may be found in D. Taubman, "Successive refinement of video: fundamental issues, past efforts and new directions, *Int. Sym. Visual Comm. Image Proc.* ", July 2003.

In recent years, scalable video coding research has experienced rapidly growing interest following several important discoveries. In particular, a new framework for constructing efficient feed-forward compression systems appears to provide substantial benefits relative to previous schemes. In fact, scalable video coders are finally beginning to achieve compression performance comparable to existing non-scalable coding methods, but with all of the desirable scalability features mentioned above. These new schemes are known as "motion-compensated lifting" schemes, and were initially proposed by Secker and Taubman (A. Secker and D. Taubman, "Lifting-based invertible motion adaptive transform (LIMAT) framework for highly scalable video compression," *IEEE Trans. Image Proc.,* Dec 2003) and concurrently by Pesquet-Popescu et al. (B. Pesquet-Popescu and V. Bottreau, "Three-dimensional lifting schemes for motion compensated video compression," *IEEE Int. Conf. Acoustics, Speech Signal Proc.,* pp 1793-1796, Dec 2001).

Motion-compensated lifting schemes allow efficient wavelet-based temporal transforms to be applied to the video data, without sacrificing the ability to invert the compression system. Wavelet temporal transforms convert the original video frames into a collection of temporal "subband" frames. Invertible transforms are particularly important because they allow the video to be perfectly reconstructed, should sufficient bandwidth become available. The temporal subband frames are processed using techniques that are essentially the same as those used for scalable image compression. Such techniques, which have now reached a state of substantial maturity (culminating in the recent JPEG2000 image compression standard), include those that can be found in J. Shapiro, "Embedded image coding using zerotrees of wavelet coefficients", *IEEE Trans. Signal Proc.,* vol 41, pp 3445-3462, Dec 1993, D. Taubman and A. Zakhor, "Multi-rate 3-d subband coding of video", *IEEE Trans. Image Proc.,* vol. 3, pp. 572-588, Sept 1994, A.Said and W. Pearlman, "A new, fast and efficient image codec based on set partitioning in hierarchical trees", *IEEE Trans. Circ. Sys. Video Tech.,* pp. 243-250, June 1996, and D. Taubman, E. Ordentlich, M. Weinberger and G. Seroussi, "Embedded Block Coding in JPEG2000", *Signal Processing - Image Communication,* vol 17, no 1 pp. 49-72, Jan 2002. Reference is also made to our co-pending application EP03255624.3 (P047), the contents of which are incorporated by reference.

The key to the high compression performance of the motion-compensated lifting transform is its ability to exploit motion very effectively, and its amenability to any motion model. A large number of motion models have been proposed in the literature, and any of these may be feasibly incorporated into the lifting transform framework. Various methods have also been proposed for representing and coding the side-information resulting from the use of parameterised motion models. Traditionally, however, the amount of side-information is significant, and being typically coded losslessly, this can significantly reduce the rate-scalability of the complete compression system.

In order to permit rate-scalability over a very wide range of bit-rates: from several kilo-bits/s (kbps) to many mega-bits/s (Mbps), the precision with which the motion information is represented must also be scalable. Without motion scalability, the cost of coding the motion parameters can consume an undue proportion of the available bandwidth at low bit-rates. Conversely, the motion may not be represented with sufficient accuracy to achieve maximum coding gain at high bit-rates. Note also that the ability to scale the precision with which motion information is processed is a natural extension of temporal scalability. This is because refining the temporal information of a reconstructed video sequence should involve not only refining the temporal sampling rate, but also the precision with which these temporal samples are interpolated by the motion-adaptive temporal synthesis filter bank.

Secker and Taubman recently addressed scalable motion coding in A. Secker and D. Taubman, "Highly scalable video compression with scalable motion coding," *to appear in IEEE Trans. Image Proc,* also disclosed on the authors website www.ee.unsw.edu.au/~taubman/. In this work they provide a novel framework for compressing and jointly scaling both the motion parameters and the video samples. Their method involves compressing the motion parameters associated with the motion-compensated lifting transform using similar scalable image coding techniques to those used to code the temporal subband frames.

Secker and Taubman's work involves two main contributions. Firstly, they describe a method for scalable compression of the motion information, and secondly, they provide a framework for optimally balancing the number of bits spent on coding the video frames with that spent on coding the motion parameters. In part, the scalable motion coding approach involves processing the individual components of the motion vectors in the same way that scalar image samples are processed in traditional scalable image coding systems. Motion information typically consists of two-dimensional arrays of two-dimensional vectors (corresponding to vertical and horizontal displacements between the video frames). They may be compressed as scalar images by extracting the vertical and horizontal motion components and arranging them into two-dimensional scalar fields. Although the spatial wavelet transforms are applied to the scalar motion component fields, the resulting transformed motion components are recombined into vectors, and are jointly subjected to embedded quantization and coding. This allows the embedded coding stage to exploit the redundancy between the transformed motion vector components.

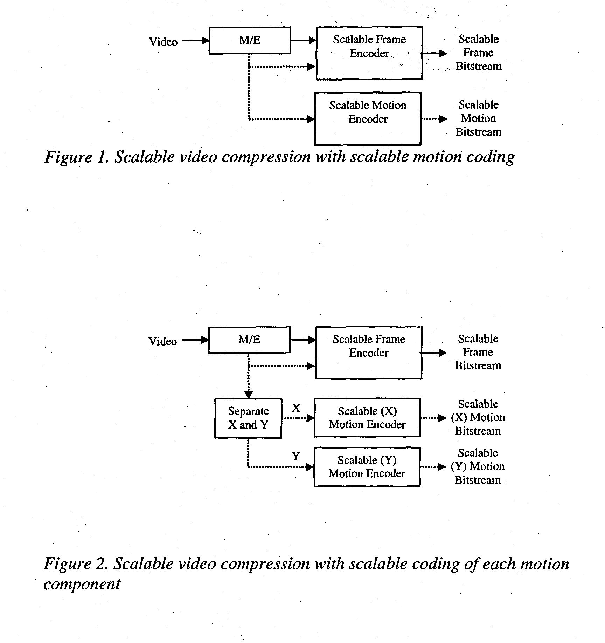

While the scalable motion-coding scheme of Secker and Taubman is of interest, also of interest is their method for optimally balancing the motion and video sample bit-rates. Unlike existing scalable video coding schemes, which involves producing a scalable video sample bitstream, plus a non-scalable motion parameter bitstream, Secker and Taubman's method produces two scalable bitstreams; one corresponding to the video samples and one corresponding to the motion parameters, as shown in Figure 1.

The original motion parameters are used to create the scalable video sample bitstream. Scaling the motion information after compression means that reconstruction is performed with different motion parameters to that used during compression. This discrepancy results in additional reconstructed video distortion. However, this additional distortion may be quantified and balanced against the distortion resulting from scaling the video sample bitstream, so that an optimal combination of motion and sample bit-rates may be found.

In A. Secker and D. Taubman, "Highly scalable video compression with scalable motion coding," mentioned above the authors show that despite the complex interaction between motion error and the resulting video distortion, the behaviour can be approximately modelled using linear methods. This important observation justifies the independent construction of scalable motion and video bitstreams, because the optimal combination of motion and sample bit-rates may be determined after the video frames have been compressed. According to Secker and Taubman, the total squared error $D^{(M)}$, due to motion error in the reconstructed video sequence, may be represented by the following linear model.

$$D^{(M)} \approx \Psi_{R,S} D_M \tag{1}$$

where $D_M$ denotes mean squared error in the motion vectors due to post-compression scaling. The scaling factor, $\Psi_{R,S}$, depends upon the spatial resolution $S$, at which the video signal is to be reconstructed and also upon the accuracy, or equivalently, the bit-rate R, at which the video samples are reconstructed.

Optimal rate allocation between the motion information and the sample data involves knowledge of the reconstructed video sample distortion $D^{(S)}$, associated with the first $L^{(S)}$ bits of the embedded representation generated during scalable coding of the subband frames. In addition, rate-allocation also involves knowledge of the reconstructed video distortion $D^{(M)}$ resulting from truncating the motion parameter bitstream to a length $L^{(M)}$. Following the method of Lagrange multipliers, the optimal allocation of motion and sample bits, for some total length $L^{max}$, occurs when

$$\frac{-\Delta D^{(S)}}{\Delta L^{(S)}} \geq \lambda \qquad \text{and} \qquad \frac{-\Delta D^{(M)}}{\Delta L^{(M)}} \geq \lambda$$

for some distortion-length slope $\lambda > 0$, and $L^{(s)} + L^{(M)}$ is as large as possible, while not exceeding $L^{max}$. Here, $\Delta D^{(S)} / \Delta L^{(S)}$ and $\Delta D^{(M)} / \Delta L^{(M)}$ are discrete approximations to the distortion-length slope at the sample and motion bitstream truncation points. In practise, it is usually sufficient to know $D^{(S)}, L^{(S)}, D^{(M)}$ and $L^{(M)}$ only for a restricted set of possible bitstream truncation points, in order to get near-optimal rate-allocation for arbitrary $L^{max}$.

According to equation (1) the rate-allocation may be equivalently performed according to

$$\frac{-\Delta D^{(S)}}{\Delta L^{(S)}} \geq \lambda \qquad \text{and} \qquad \Psi_{R,S} \frac{-\Delta D_M}{\Delta L^{(M)}} \geq \lambda$$

so long as $\Psi_{R,S}$ is relatively constant under small changes in $L^{(M)}$. According to Secker and Taubman mentioned above, this is generally the case, so that the rate-distortion optimality of the coded motion data is substantially independent of the sample data, and the scalable motion bitstream can be constructed independently of the scalable sample bitstream. The optimal rate-allocation between motion and sample data can be found after compression, according to the motion sensitivity factor $\Psi_{R,S}$.

Although this rate-distortion optimisation model may be feasibly applied to any method of scalable video coding, the EBCOT algorithm adopted for JPEG2000 provides an excellent framework for coding and jointly scaling both motion and sample bitstreams. A complete discussion of the EBCOT coding algorithm can be found in D. Taubman, E. Ordentlich, M. Weinberger and G. Seroussi, "Embedded Block Coding in JPEG2000", *Signal Processing - Image Communication,* vol 17, no 1 pp. 49-72, Jan 2002. The EBCOT algorithm produces a bitstream organised into embedded "quality layers". Truncation of the bitstream at any layer boundary yields a reconstructed signal satisfying the rate-distortion optimisation objective described above. Further reconstruction involving a partial quality layer reduces the reconstructed distortion, but not necessarily in a rate-distortion optimal manner. This sub-optimality is generally insignificant so long as a sufficient number of quality layers are used.

Current methods for jointly scaling motion parameters together with the video data consider only the magnitude of the motion vector distortion, and not the orientation. However, it is not uncommon for video sequences to exhibit anisotropic power spectra, so that the effect of vertical and horizontal motion errors can be significantly different. When this is the case, the allocation of bits between the vertical and horizontal motion vector components is sub-optimal in existing schemes. Correcting this problem can result in greater compression efficiency, thereby reducing the performance penalty associated with scalable motion information.

The inventive idea is to improve the rate-distortion optimisation of the complete video coder by individually performing rate-allocation on each motion vector component. Essentially, this involves spending more bits on the motion components to which the reconstructed video data is most sensitive. For example, with video data containing predominantly high frequency energy in the vertical direction, more bits are spent on coding the vertical motion components and less are spent on coding the horizontal motion vector components. Conversely, the majority of the motion bits are spent on coding the horizontal motion vector components when the video sequence contains predominantly horizontal texture information, and is therefore more sensitive to horizontal motion errors.

The present invention hinges on an improvement to the motion-induced video distortion model of the prior art. The modified model now incorporates terms for each motion vector component MSE, rather than a single term corresponding to the motion vector magnitude MSE. The improved model is described by

$$D_{x,M} \approx \Psi_{R,S}^1 D_M^1 + \Psi_{R,S}^2 D_M^2$$

where $\Psi_{R,S}^1$ and $D_M^1$ refer to the vertical motion vector component, and $\Psi_{R,S}^2$ and $D_M^2$ refer to the horizontal motion vector component. Assuming uncorrelated motion and sample errors, the following additive distortion model may then be used to quantify the total reconstructed video distortion as the sum of the individual motion component distortions and the frame sample distortion.

$$D_x \approx D_S + \Psi_{R,S}^1 D_M^1 + \Psi_{R,S}^2 D_M^2$$

Existing methods for the coding and rate-allocation of the motion information may be naturally extended to facilitate the application of the improved model. These extensions are described below.

Generally, an aspect of the invention concerns a method of encoding motion picture data using motion compensation, the method comprising taking into account the influence of the horizontal and vertical motion vector components (eg in reconstruction/reconstruction error) individually. This can be achieved by encoding the horizontal and vertical motion vector components separately, and eg preferentially encoding the component which makes the more significant contribution to quality of the reconstructed image/frame. The preferential encoding may involve shifting or scaling, such as bit-plane shifting in bit-plane or fractional bit-plane coding. The preferential encoding may be on the basis of bit rate allocation, ie allocating more bits to the more significant motion vector component, eg using optimisation techniques, eg minimising reconstruction error for different bit rates and/or spatial resolution. The invention is especially applicable in the context of scalable encoding of motion vectors, especially in relation to 3-D subband coding.

According to another aspect of the invention, there is provided a method of encoding motion picture data, especially motion-compensated 3-D subband coding, wherein first components of the motion vectors from motion compensation are scalably encoded separately or independently of second components of the motion vectors, the method comprising separate bit-rate-allocation for the first and second components of motion vectors. The motion vectors are derived from a motion estimation technique.

These and other aspects of the invention are set out in the accompanying claims.

Embodiments of the invention will be described with reference to the accompanying drawings of which:

Fig. 1 is a block diagram of a prior art encoding system;
Fig. 2 is a block diagram of an encoding system according to an embodiment of the present invention.

The main difference between the present invention and the prior art is that distortion in the vertical and horizontal motion vector components are controlled independently. This is achieved by first separating the motion vector fields into scalar fields corresponding to each image dimension, and coding each separately, thereby producing dual scalable motion component bitstreams, as shown in Figure 2.

Each motion component bitstream may be scalably encoded using any of the scalable image compression techniques established in the literature. In particular, it is preferable to use those methods derived from the recent JPEG2000 image compression standard, which have already been shown in Secker and Taubman mentioned above to operate effectively on motion data. In its simplest form, the present invention does not involve recombining the motion vector components prior to embedded quantization and coding. Note that this differs from the prior art, in which each motion vector is jointly subject to embedded quantization and coding, using a variation of the fractional bit-plane coding techniques of JPEG2000.

Efficient reconstruction of the video requires precise rate-allocation between the coded sample information and each of the two coded motion component representations. This is facilitated by auxiliary rate-allocation information, which specifies the optimal combination of motion and sample data depending on the desired reconstruction parameters, such as spatial resolution and bit-rate. The auxiliary rate information required for reconstruction, whether by a video server or from a compressed file, consists of a set of tables similar to those described above as prior art. However, in the present invention, the rate tables determine the two (not one) motion bit-rates, as well as the video sample bit-rate, for each required reconstruction bit-rate and spatial resolution.

In practise, it is sufficient to only specify the motion component and sample bit-rates corresponding to a selection of reconstruction bit-rates. Alternatively, the rate tables may specify the number of motion component and sample quality layers to use for a selection of reconstructed bit-rates and spatial resolutions. Should the desired reconstruction rate fall between the total bit-rates specified by the rate-table, the rate-allocation corresponding to the next lower total bit-rate is used, and the remaining bits are allocated to sample data. This convention has the property that the motion bitstreams are always reconstructed at bit-rates corresponding to a whole number of motion component quality layers, which ensures that the motion bitstreams are themselves rate-distortion optimal. In addition, it encourages a conservative allocation of motion-information, meaning that the balance of motion and sample data will tend to favour sending slightly more motion information, rather than slightly less. Alternatively, we could approximate the R-D slope as changing linearly between quality layers, so that the distortion length curve between quality layers is modelled as a second order polynomial. This approximation provides us with a means for allocating bit-rate using partial motion and sample quality layers.

It is possible to determine the rate-tables by reconstructing the video once with every combination of motion component and sample bit-rates that may be combined to attain each reconstructed bit-rate. With this approach, it is necessary to restrict the search to include only the motion component and sample rates corresponding to a whole number of quality layers. After each reconstruction at a particular total bit-rate, the PSNR is measured and the combination resulting in the highest PSNR is selected as the optimal rate-allocation.

Preferably, the above approach is speeded by first performing a coarse search, where the two motion component bit-rates are constrained to be the same. This would involve testing only pairs of bit-rates (motion and sample bit-rates) for each total bit-rate, in the same manner as described by the prior art (Secker and Taubman mentioned above). This method will yield a good initial guess because the optimal motion component bit-rates will usually be of the same order of magnitude. The initial guess is refined by trying several motion component bit-rates that are near that determined by the initial guess. Again, the search is restricted to only those motion bit-rates corresponding to whole motion component layers.

In order to determine the rate tables in an even more computationally effective manner, we may exploit the fact that the combination of the three data sources is optimal when each is truncated so that the distortion-length slope of each bitstream, at the respective truncation points, are identical. That is, we use the fact that the Lagrangian optimisation objective involves truncating the three bitstreams so that

$$\frac{-\Delta D^{(S)}}{\Delta L^{(S)}} \geq \lambda \qquad \text{and} \qquad \Psi_{R,S}^1 \frac{-\Delta D_M^1}{\Delta L^{(M,1)}} \geq \lambda \qquad \text{and} \qquad \Psi_{R,S}^2 \frac{-\Delta D_M^2}{\Delta L^{(M,2)}} \geq \lambda$$

for some slope $\lambda > 0$, where $L^{(S)} + L^{(M,1)} + L^{(M,2)}$ is as large as possible, while not exceeding $L^{max}$. This problem is similar to that described in [8], where the solution is referred to as 'model-based rate allocation'. The present invention involves essentially the same rate-allocation procedure, except that we now use two motion component bitstreams, and two motion sensitivity factors. The motion sensitivity factors are found by evaluating the following integrals, where $S_{R,S}(\omega_1, \omega_2)$ is determined using an appropriate power spectrum estimation method.

$$\Psi_{1,R,S} = \frac{1}{(2\pi)^2} \iint S_{R,S}(\omega_1, \omega_2)\omega_1^2 d\omega_1 d\omega_2$$

$$\Psi_{2,R,S} = \frac{1}{(2\pi)^2} \iint S_{R,S}(\omega_1, \omega_2)\omega_2^2 d\omega_1 d\omega_2$$

As reported in Secker and Taubman mentioned above, and indicated by the equations, efficient rate-allocation generally requires a different pair of motion sensitivity factors to be used for each spatial resolution S, and for a selection of reconstruction bit-rates R.

A limitation of the previous embodiment is that encoding and transmitting the motion vector components independently can reduce the efficiency with which the entire set of motion vectors is compressed. There are two reasons for this. The first is that each motion bitstream requires header information to indicate various reconstruction parameters such as spatial dimensions, as well as information pertaining to optimal truncation of the bitstream. The latter exists in various forms, including identification markers for code-blocks, quality layers, spatiotemporal subbands etc. This overhead is approximately doubled when two motion component bitstreams, as in the present invention, replace a single motion vector bitstream, as used in prior art. In order to reduce the signalling overhead required by the two motion component bitstreams, it is preferable to wrap the two component bitstreams into a single bitstream, allowing various markers to be shared between the motion components. This will generally include at least the spatio-temporal subband markers, dimension information, spatio-temporal decomposition and embedded coding parameters.

A second reason why independently coding motion vector components can reduce compression is that this prevents us from exploiting the redundancy between the two motion components. In order to reduce the effects of this, an alternative implementation of the present invention involves recombining the two motion vector components prior to embedded quantization and coding. Note that this means we cannot independently allocate bits between the two motion component bitstreams, so that the rate-allocation is sub-optimal. However, this may be compensated for by the increased coding efficiency realized be exploiting the dependency between the two bitstreams. In particular, we wish to exploit the fact that when one motion component is zero, the other motion component is also likely to be zero. This can be done using context coding methods, similar to that proposed by Secker and Taubman mentioned above. However, unlike the previous work, the present invention also involves exploiting the relative significance of the two motion components on the reconstructed video distortion. This may be performed by further modifying the fractional bit-plane coding operation from that described in Seeker and Taubman. For example, we may apply a scaling operation to one motion vector component prior to bit-plane coding. A simple way to achieve this is by left-shifting all vertical motion vector component samples by a number of bits, N, where

$$N = \log_2\left(\frac{\Psi_1}{\Psi_2}\right)$$

Alternatively, we can left-shift the horizontal motion vector component by $-N$, when $N$ is negative. This approach effectively modifies the bit-plane scanning order between the two motion vector components, and is similar in concept to the method of bit-plane shifting used for content-based scalability in MPEG-4 Fine Granularity Scalability coding schemes, as described in M. van der Schaar and Y-T Lin, "Content-based selective enhancement for streaming video," *IEEE Int. Conf. Image Proc.* vol. 2, pp. 977-980, Sept 2001. Note that the bit-shift parameters are transmitted to the decoder so that the correct magnitude may be recovered during decompression, but the number of bits required to send these parameters is small, having no significant impact on compression performance.

The invention can be implemented for example in a computer-based system, or using suitable hardware and/software, or in an application-specific apparatus or application-specific modules, such as chips. A coder is shown in Fig. 2 and a corresponding decoder has corresponding components for performing the inverse decoding operations.

**Claims**

1. A method of encoding motion picture data using motion-compensated 3-D sub-band coding, wherein first components of the motion vectors are scalably encoded separately or independently from second components of the motion vectors.

2. The method of claim 1 comprising separate bit rate allocation for the first and second motion vector components.

3. A method of encoding motion picture data using motion compensation, wherein first components of the motion vectors are encoded separately or independently of second components of the motion vectors, and comprising separate bit-rate-allocation for the first and second components of motion vectors.

4. The method of claim 3 wherein the motion picture data is encoded using motion-compensated 3-D sub-band coding.

5. The method of claim 3 or claim 4 wherein the encoding of the motion vectors is scalable encoding.

6. The method of any of claims 2 to 5 wherein the rate allocation takes into account variations in vertical and horizontal content in the image sequence.

7. The method of any of claims 2 to 6 wherein the rate allocation takes into account variations in the sensitivity of the image sequence to vertical and horizontal motion.

8. The method of any of claims 2 to 7 wherein rate allocation involves horizontal and vertical motion sensitivity or scaling factors reflecting reconstruction error due to horizontal and vertical motion error respectively.

9. The method of any of claims 2 to 8 wherein rate allocation involves a motion-induced video distortion model in the form

$$D_{x,M} \approx \psi_{R,S}^1 \, D_M^1 + \Psi_{R,S}^2 \, D_M^2$$

where $\Psi_{R,S}^1$ and $D_M^1$ refer to the vertical motion vector component, and $\Psi_{R,S}^2$ and $D_M^2$ refer to the horizontal motion vector component, or a total reconstructed video distortion model of the form $D_x^M \approx D_S + \Psi_{R,S}^1 \, D_M^1 + \Psi_{R,S}^2 \, D_M^2$ combining frame sample distortion and motion component distortions.

10. The method of any of claims 2 to 9 comprising determining rate allocation for a plurality of reconstruction bit rates and/or spatial resolutions.

11. The method of claim 10 comprising deriving and storing a rate table comprising rate allocation information for motion vector components for a plurality of reconstruction bit rates and/or spatial resolutions.

12. A method of encoding motion picture data using motion-compensated 3-D sub-band coding, wherein the components of the motion vectors are scalably encoded together using context coding, the method comprising scaling or shifting one motion vector component relative to the other.

13. The method of claim 12 comprising left-shifting motion vector samples for one component by N or -N where

$$N = N = \log_2\left(\frac{\Psi_1}{\Psi_2}\right)$$

before bit-plane coding.

**14.** A method of encoding motion picture data using motion compensation, the method comprising taking into account the influence of the horizontal and vertical motion vector components (eg in reconstruction/reconstruction error) individually.

**15.** The method of claim 14 comprising enhancing the encoding of one of the motion vector components to reduce reconstruction error.

**16.** A method of decoding motion picture data encoded using a method as claimed in any preceding claim.

**17.** A method as claimed in claim 16 comprising identifying bits allocated to horizontal and vertical motion vector components separately, and reconstructing the image sequence using the decoded horizontal and vertical motion vector components.

**18.** A representation of an image sequence encoded using the method of any of claims 1 to 15.

**19.** Apparatus adapted to implement a method as claimed in any of claims 1 to 17.

**20.** The apparatus of claim 14 comprising a scalable motion encoder and/or decoder for encoding and/or decoding first motion vector components and a scalable motion encoder and/or decoder for encoding and/or decoding second motion vector components.

**21.** The apparatus of claim 19 or claim 20 comprising means for allocating bits to first and second encoded motion vector components.

**22.** The apparatus of claim 16 comprising a rate table for allocating bits to first and second encoded motion vector components.

**23.** Computer program for executing the method of any of claims 1 to 17 or computer-readable storage medium storing said computer program.

Figure 1. Scalable video compression with scalable motion coding

Figure 2. Scalable video compression with scalable coding of each motion component

**European Patent Office**

## EUROPEAN SEARCH REPORT

**Application Number**

EP 04 25 1920

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ILLGNER K ET AL: "HIERARCHICAL CODING OF MOTION VECTOR FIELDS" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. VOL. 1, 23 October 1995 (1995-10-23), pages 566-569, XP000624301 ISBN: 0-7803-3122-2 * abstract * * paragraph '0003! * | 1,2, 16-23 | H04N7/26 |
| A | BOTTREAU V ET AL: "A FULLY SCALABLE 3D SUBBAND VIDEO CODEC" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 2 OF 3. CONF. 8, 7 October 2001 (2001-10-07), pages 1017-1020, XP001061220 ISBN: 0-7803-6725-1 * paragraph '02.1! * * paragraph '03.4! * | 1,2, 16-23 | |
| D,A | SECKER A ET AL: "Lifting-based invertible motion adaptive transform (LIMAT) framework for highly scalable video compression" IEEE TRANSACTIONS ON IMAGE PROCESSING IEEE USA, vol. 12, no. 12, December 2003 (2003-12), pages 1530-1542, XP002294238 ISSN: 1057-7149 * abstract * * paragraph '00IV! * | 1,2, 16-23 | TECHNICAL FIELDS SEARCHED (Int.Cl.7) H04N |

-/--

The present search report has been drawn up for all claims

| Place of search | Date of completion of the search | Examiner |
|---|---|---|
| The Hague | 13 December 2004 | Georgiou, G |

EPO FORM 1503 03.82 (P04C01)

**European Patent Office**

## EUROPEAN SEARCH REPORT

Application Number

EP 04 25 1920

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 02/32143 A (SNELL VIOLET ; KNEE MICHAEL JAMES (GB); SNELL & WILCOX LTD (GB)) 18 April 2002 (2002-04-18) * page 9, line 27 - line 30 * | 1,2, 16-23 | |
| A | GB 2 368 220 A (SNELL & WILCOX LTD) 24 April 2002 (2002-04-24) * claims 1-3 * | 1,2, 16-23 | |
| E | WO 2004/028166 A (SECKER ANDREW ; TAUBMAN DAVID (AU); UNISEARCH LTD (AU)) 1 April 2004 (2004-04-01) * page 20, line 20 - line 27 * | 1,2, 16-23 | |
| X | US 6 498 810 B1 (KIM SUNG DEUK  ET AL) 24 December 2002 (2002-12-24) | 3,6 | |
| Y | * abstract * | 4,5,7,8, 10,11 | |
| A | * column 3, line 28 - column 4, line 5 * | 9 | |
| Y | TAUBMAN D ET AL: "Highly scalable video compression with scalable motion coding" PROCEEDINGS 2003 INTERNATIONAL CONFERENCE ON IMAGE PROCESSING (CAT. NO.03CH37429) IEEE PISCATAWAY, NJ, USA, vol. 2, 14 September 2003 (2003-09-14), pages III-273-III-276, XP002310270 ISBN: 0-7803-7750-8 * paragraph '0004! * | 4,5,7,8, 10,11 | TECHNICAL FIELDS SEARCHED (Int.Cl.7) |
| A | ANDREOPOULOS Y ET AL:  "Open-Loop, In-Band, Motion-Compensated Temporal Filtering For Objective Full-Scalability In Wavelet Video Coding" ISO/IEC JTC/SC29/WG11 M9026, XX, XX, October 2002 (2002-10), pages 1-19, XP002282534 * paragraph 'The IBMCTF system! * | 3-11 | |

-/--

The present search report has been drawn up for all claims

| Place of search | Date of completion of the search | Examiner |
|---|---|---|
| The Hague | 13 December 2004 | Georgiou, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office** **EUROPEAN SEARCH REPORT**

Application Number

EP 04 25 1920

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | "MPEG-4 VIDEO VERIFICATION MODEL VERSION 7.0" INTERNATIONAL ORGANIZATION FOR STANDARDIZATION - ORGANISATION INTERNATIONALE DE NORMALISATION, XX, XX, vol. N1642, April 1997 (1997-04), pages 1-271, XP000861690 * paragraph '3.3.3.7! * * paragraph '6.1.9! * * paragraph '3.3.5! * ----- | 3-11 | |
| A | US 5 905 535 A (KERDRANVAT MICHEL) 18 May 1999 (1999-05-18) * column 5, line 10 - line 15 * * column 5, line 50 - line 55 * ----- | 3-11 | |
| | | | TECHNICAL FIELDS SEARCHED (Int.Cl.7) |

The present search report has been drawn up for all claims

| Place of search | Date of completion of the search | Examiner |
|---|---|---|
| The Hague | 13 December 2004 | Georgiou, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent
Office

Application Number

EP 04 25 1920

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-11,16-23

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

Application Number

EP 04 25 1920

The Search Division considers that the present European patent application does not comply with the requirements of unity of invention and relates to several inventions or groups of inventions, namely:

1. claims: 1,2,16-23

   Method of encoding motion picture data using motion compensated 3D subband coding where the vertical components of the motion vectors are scalably encoded separately from the horizontal components of the motion vectors.
   ---

2. claims: 3-11

   Method of encoding motion picture data using motion compensation where the vertical components of the motion vectors are encoded separately from the horizontal components of the motion vectors and with a different bit-rate allocation.
   ---

3. claims: 13,14

   Method of encoding motion picture data using motion compensated 3D subband coding where the components of the motion vectors are scalably encoded together using context coding.
   ---

4. claims: 14,15

   Method of encoding motion picture data using motion compensation where the method comprises taking into account the influence of the horizontal and vertical motion vector components individually.
   ---

## ANNEX TO THE EUROPEAN SEARCH REPORT
## ON EUROPEAN PATENT APPLICATION NO.

EP 04 25 1920

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2004

| Patent document cited in search report | | Publication date | Patent family member(s) | | Publication date |
|---|---|---|---|---|---|
| WO 0232143 | A | 18-04-2002 | GB | 2368220 A | 24-04-2002 |
| | | | GB | 2371933 A | 07-08-2002 |
| | | | AU | 9399401 A | 22-04-2002 |
| | | | CA | 2424340 A1 | 18-04-2002 |
| | | | EP | 1325636 A2 | 09-07-2003 |
| | | | WO | 0232143 A2 | 18-04-2002 |
| | | | JP | 2004511978 T | 15-04-2004 |
| | | | US | 2004057518 A1 | 25-03-2004 |
| GB 2368220 | A | 24-04-2002 | AU | 9399401 A | 22-04-2002 |
| | | | CA | 2424340 A1 | 18-04-2002 |
| | | | EP | 1325636 A2 | 09-07-2003 |
| | | | WO | 0232143 A2 | 18-04-2002 |
| | | | JP | 2004511978 T | 15-04-2004 |
| | | | US | 2004057518 A1 | 25-03-2004 |
| WO 2004028166 | A | 01-04-2004 | WO | 2004028166 A1 | 01-04-2004 |
| US 6498810 | B1 | 24-12-2002 | KR | 249223 B1 | 15-03-2000 |
| | | | DE | 19825042 A1 | 18-03-1999 |
| | | | GB | 2329295 A ,B | 17-03-1999 |
| | | | JP | 11112994 A | 23-04-1999 |
| US 5905535 | A | 18-05-1999 | FR | 2725577 A1 | 12-04-1996 |
| | | | CA | 2160087 A1 | 11-04-1996 |
| | | | CN | 1132983 A ,B | 09-10-1996 |
| | | | DE | 69525009 D1 | 21-02-2002 |
| | | | DE | 69525009 T2 | 31-10-2002 |
| | | | EP | 0707428 A1 | 17-04-1996 |
| | | | ES | 2171513 T3 | 16-09-2002 |
| | | | JP | 8251601 A | 27-09-1996 |
| | | | JP | 2004112818 A | 08-04-2004 |

EPO FORM P0459

For more details about this annex : see Official Journal of the European Patent Office, No. 12/82